# EUROPÄISCHE PATENTSCHRIFT

(11) **EP 2 136 006 B1**
(45) Veröffentlichungstag und Bekanntmachung des Hinweises auf die Patenterteilung: **12.06.2013**
(21) Anmeldenummer: 09005070.9
(22) Anmeldetag: 06.04.2009
(51) Int. Cl.: B60T 10/04, B60T 13/68, E02F 9/22

(54) **Verfahrbares Arbeitsgerät**
Mobile work device
Appareil de travail mobile

(30) Priorität: 16.06.2008 DE 202008008044 U
(43) Veröffentlichungstag der Anmeldung: 23.12.2009
(73) Patentinhaber: Liebherr-Hydraulikbagger GmbH, 88457 Kirchdorf/Iller (DE)
(72) Erfinder: Meier, Simon, 87700 Memmingen (DE)
(74) Vertreter: Laufhütte, Dieter

(56) Entgegenhaltungen:
- WO-A-03/038200
- DE-T5- 10 197 080
- JP-A- 2003 269 205
- US-A- 4 435 021

## Beschreibung

Die vorliegende Erfindung betrifft ein verfahrbares Arbeitsgerät, insbesondere einen Hydraulikbagger, mit einem Fahrwerk und mit einer hydraulischen Betriebsbremsanlage für das Fahrwerk, welche über mindestens ein Bremsventil mit Bremsdruck beaufschlagt wird. Über diese hydraulische Betriebsbremsanlage kann das verfahrbare Arbeitsgerät während der Fahrt gebremst werden. Insbesondere betrifft die vorliegende Erfindung dabei verfahrbare Baumaschinen mit einer entsprechenden Betriebsbremsanlage.

Bei bekannten verfahrbaren Arbeitsgeräten mit hydraulischer Betriebsbremsanlage sind dabei die Bremsventile, über welche der Bremsdruck gesteuert wird, in der Fahrerkabine angeordnet und können mechanisch über ein Bedienelement, z.B. ein Bremspedal, vom Fahrer angesteuert werden. Hierdurch müssen lange Hydraulikleitungen vom Bremsventil zu den Bremsen für das Fahrwerk vorgesehen werden. Gerade bei einer Kabine mit einem Hubgestell oder einem Glasboden in der Kabine sind solche Hydraulikleitungen äußerst störend. Zudem ergibt sich bei Großgeräten das Problem, dass über die sehr langen Bremsleitungen von der Kabine zum Fahrgestell eine Bremsverzögerung auftritt.

Aus der WO 03/038200 A1 ist ein fahrbares Arbeitsgerät mit einem Fahrwerk und einer hydraulischen Betriebsbremsanlage für das Fahrwerk bekannt, welche über mindestens ein Bremsventil mit Bremsdruck beaufschlagt wird. Das Arbeitsgerät weist einen Unterwagen auf, an welchem das Fahrwerk, die Betriebsbremsanlage und das Bremsventil angeordnet sind, und einen auf dem Unterwagen drehbar angeordneten Oberwagen. Das Bremsventil ist dabei elektrisch ansteuerbar, wobei es über eine elektrische Steuerleitung mit einem Bedienelement verbunden ist, welches an Oberwagen angeordnet ist und über welches eine Bedienperson das verfahrbare Arbeitsgerät abbremsen kann. In der brake-by-wire Einheit in Unterwagen sind außerdem hydraulische Speicher für einen Notbetrieb vorgesehen. Weiterhin ist an Oberwagen eine Hydraulikpumpe vorgesehen.

Aufgabe der vorliegenden Erfindung ist es daher, ein verfahrbares Arbeitsgerät mit einer verbesserten Betriebsbremsanlage zur Verfügung zu stellen.

Diese Aufgabe wird von einem verfahrbaren Arbeitsgerät gemäß Anspruch 1 und gemäß Anspruch 2 gelöst. Ein solches verfahrbares Arbeitsgerät, insbesondere ein Hydraulikbagger, weist dabei ein Fahrwerk und eine hydraulische Betriebsbremsanlage für das Fahrwerk auf, welche über mindestens ein Bremsventil mit Bremsdruck beaufschlagt wird. Erfindungsgemäß ist dabei vorgesehen, dass das Bremsventil elektrisch ansteuerbar ist, wobei es über eine elektrische Steuerleitung mit einem Bedienelement verbunden ist, über welches eine Bedienperson das verfahrbare Arbeitsgerät abbremsen kann. Durch die elektrische Ansteuerung des Bremsventils kann dieses in unmittelbarer Nähe zu den Bremsen der Betriebsbremsanlage angeordnet werden. Hierdurch kann auf die störenden Hydraulikleitungen in der Fahrerkabine verzichtet werden. Ebenso entfällt die aufwendige Verschlauchung von der Kabine zum Fahrwerk und zurück. Ebenso kann hierdurch die bei langen Bremsleitungen auftretende Bremsverzögerung vermieden werden.

Die hydraulische Betriebsbremsanlage weist dabei eine oder mehrere Bremsen für das Fahrwerk auf, welche über das Bremsventil mit Bremsdruck beaufschlagt werden, wobei dieses Bremsventil nunmehr elektrisch angesteuert wird. Die Bedienperson kann damit durch Betätigung des Bedienelementes, z.B. eines Bremspedals, das verfahrbare Arbeitsgerät wie bei bekannten Betriebsbremsanlagen während der Fahrt abbremsen. Hierzu wandelt das Bedienelement die Steuerbewegung der Bedienperson in elektrische Signale um, durch welche das Bremsventil angesteuert wird.

Die vorliegende Erfindung wird dabei bei einem verfahrbaren Arbeitsgerät mit einem Unterwagen und einem darauf drehbar angeordneten Oberwagen eingesetzt. Das verfahrbare Arbeitsgerät der vorliegenden Erfindung weist daher einen Unterwagen auf, an welchem das Fahrwerk, die Betriebsbremsanlage und das Bremsventil angeordnet sind, sowie einen auf dem Unterwagen drehbar angeordneten Oberwagen, an welchem das Bedienelement angeordnet ist. Insbesondere ist das Bedienelement in der am Oberwagen angeordneten Fahrerkabine angeordnet. Dadurch, dass die Ansteuerung des Bremsventils nunmehr elektrisch erfolgt, kann daher die Anzahl der Drehdurchführungskanäle zwischen dem Oberwagen und dem Unterwagen reduziert werden, so dass sich die Komplexität der Drehdurchführung vermindert.

Weiterhin ist dabei mindestens ein Hydraulikspeicher vorgesehen, welcher die hydraulische Betriebsbremsanlage mit Druck versorgt, wobei der Speicher im Unterwagen angeordnet ist. Hierdurch ergeben sich wiederum kurze Hydraulikwege sowie eine kompakte Anordnung des hydraulischen Betriebsbremssystems.

Dabei wird der Hydraulikspeicher über eine im Oberwagen angeordnete Hydraulikpumpe geladen. Hierdurch kann die üblicherweise im Oberwagen angeordnete Hydraulikpumpe, über welche die hydraulischen Aktuatoren des Arbeitsgerätes mit Hydraulikdruck versorgt werden, auch dazu verwendet werden, den Hydraulikspeicher der hydraulischen Betriebsbremsanlage mit Druck zu versorgen. Hierbei wird nur ein Drehdurchführungskanal benötigt, um den Hydraulikspeicher zu laden.

In einer Ausgestaltung gemäß Anspruch 1 ist dabei ein im Oberwagen angeordnetes Speicherladeventil vorgesehen.

In einer Ausgestaltung gemäß Anspruch 2 steht der Hydraulikspeicher über Rückschlagventile mit einer durch die Drehdurchführung zwischen Oberwagen und Unterwagen geführten Ladeleitung in Verbindung.

In vorteilhafter Weise ist zumindest ein Notventil vorgesehen, welches im Notfall, insbesondere bei einem Bruch der elektrischen Steuerleitung zur Ansteuerung des Bremsventils, die hydraulische Betriebsbremsanlage mit dem vollen Bremsdruck beaufschlagt. Vorteilhafterweise ist das Notventil hierzu ebenfalls elektrisch ansteuerbar und schaltet bei einem Bruch der elektrischen Steuerleitung zur Ansteuerung des Bremsventils automatisch in den Notbetrieb.

In weiterhin vorteilhafter Weise ist mindestens ein Wechselventil vorgesehen, welches im Notfall das Bremsventil von der Betriebsbremsanlage trennt und das Notventil mit der Betriebsbremsanlage verbindet. Hierdurch wird sichergestellt, dass im Notfall kein Druckabfall über ein z. B. nicht ganz geschlossenes Bremsventil entsteht.

Erfindungsgemäß ergibt sich so durch das Notventil, gegebenenfalls in Kombination mit dem Wechselventil, eine äußerst sichere Betriebsbremsanlage.

Vorteilhafterweise ist dabei das Bremsventil als Druckminderventil ausgeführt. Über ein solches Druckminderventil kann die Betriebsbremsanlage z. B. proportional mit Bremsdruck beaufschlagt werden. Durch die Verwendung eines Druckminderventils ergibt sich ein besonders gutes Ansprechverhalten der Betriebsbremsanlage, so dass gefühlvoll gebremst werden kann. Vorteilhafterweise wird dabei ein 3-Wege-Druckminderventil eingesetzt.

In weiterhin vorteilhafter Weise ist eine elektronische Steuerung vorgesehen, über welche das Ansprechverhalten des Bremsventils bei Betätigung des Bedienelements einstellbar ist. Über diese elektronische Steuerung lässt sich die Bremscharakteristik des verfahrbaren Arbeitsgerätes einstellen.

In weiterhin vorteilhafter Weise weist das verfahrbare Arbeitsgerät der vorliegenden Erfindung dabei mindestens zwei Bremskreise auf, die getrennt voneinander jeweils über mindestens ein Bremsventil mit Druck beaufschlagt werden. Durch diesen redundanten Aufbau ergibt sich eine doppelte Sicherheit der Betriebsbremsanlage.

Vorteilhafterweise werden dabei die beiden Bremskreise über Hydraulikspeicher mit Druck versorgt, welche im Unterwagen angeordnet sind und welche über eine gemeinsame Hydraulikleitung geladen werden. Es sind also zwei getrennte Bremskreise mit ihren jeweiligen Hydraulikspeichern vorgesehen sind, wobei dennoch nur ein Drehdurchführungskanal notwendig ist, um diese aufzuladen. Hierdurch ergibt sich wiederum eine besonders einfache Konstruktion.

Die vorliegende Erfindung wird nun anhand eines Ausführungsbeispiels sowie einer Zeichnung näher beschrieben.

Dabei zeigt die einzige Figur ein erstes Ausführungsbeispiel eines Betriebsbremssystems eines erfindungsgemäßen verfahrbaren Arbeitsgerätes.

Bei dem verfahrbaren Arbeitsgerät handelt es sich dabei vorteilhafterweise um ein Baugerät, insbesondere um ein Baugerät mit hydraulischem Antrieb für das Fahrwerk und/oder die Arbeitsgeräte, insbesondere um einen Hydraulikbagger.

Bei dem in der einzigen Figur gezeigten Ausführungsbeispiel eines Betriebsbremssystems weist die hydraulische Betriebsbremsanlage für das Fahrwerk Bremsen 10 auf, über welche die Räder des Fahrwerks während der Fahrt abgebremst werden können. Die Betriebsbremsanlage mit den Bremsen 10 wird dabei über die Bremsventile 1 mit Druck beaufschlagt, wobei die Bremsventile 1 erfindungsgemäß elektrisch ansteuerbar sind. Dabei ist eine elektrische Steuerleitung vorgesehen, über welche die Bremsventile 1 mit einem Bedienelement verbunden sind, über welches eine Bedienperson das verfahrbare Arbeitsgerät abbremsen kann.

Durch die elektronische Ansteuerung der Bremsventile 1 müssen diese nicht in der Fahrerkabine angeordnet werden, sondern können in der Nähe der Bremsen plaziert werden, so dass auf eine aufwendige Verschlauchung in der Fahrerkabine verzichtet werden kann. Dort muss lediglich das Bedienelement vorgesehen sein, welches die Fahrerbefehle in ein elektrisches Steuersignal zur Ansteuerung der Bremsventile 1 umwandelt. Als Bedienelement kann z.B. ein Bremspedal vorgesehen sein. Weiterhin ist vorteilhafterweise eine elektronische Steuerung vorgesehen, durch welche das Ansprechverhalten des Bremssystems z. B. über eine Software eingestellt werden kann.

Das erfindungsgemäße Bremssystem wird dabei in einem verfahrbaren Arbeitsgerät mit einem Unterwagen und einem darauf drehbaren angeordneten Oberwagen eingesetzt. Dabei sind das Fahrwerk, die Betriebsbremsanlage mit den Bremsen 10 sowie die Bremsventile 1 im Unterwagen angeordnet, während das Bedienelement im Oberwagen, z. B. in der Fahrerkabine angeordnet ist. Weiterhin sind Hydraulikspeicher 4 im Unterwagen vorgesehen, über welche die hydraulische Betriebsbremsanlage mit Druck versorgt wird. Die Hydraulikspeicher 4 werden dabei über eine Hydraulikpumpe 7, welche im Oberwagen angeordnet ist, geladen. Hierzu ist ein ebenfalls im Oberwagen angeordnetes Speicherladeventil 6 vorgesehen. Zum Laden der Speicher ist dabei lediglich ein Drehdurchführungskanal in der Drehdurchführung 5 zwischen dem Oberwagen und dem Unterwagen von Nöten. Die Hydraulikspeicher stehen dabei über Rückschlagventile 8 mit einer Ladeleitung in Verbindung.

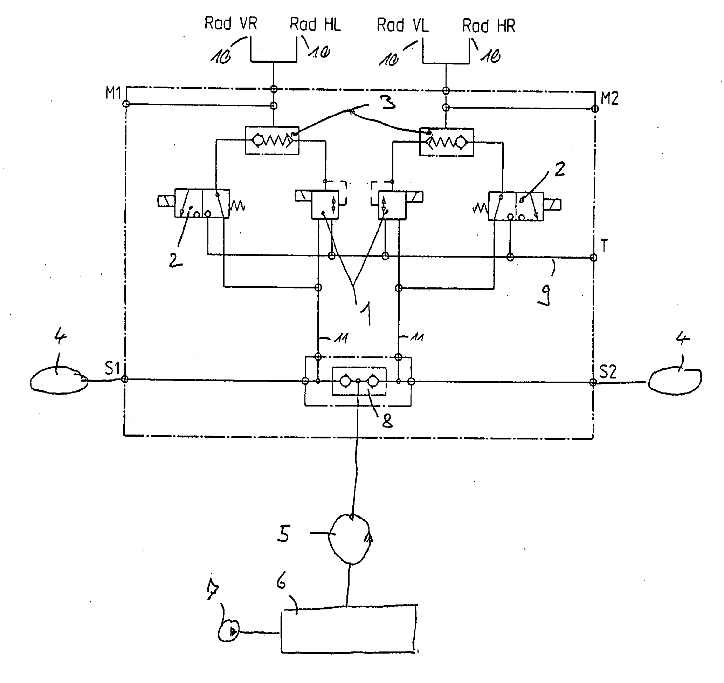

Das erfindungsgemäße Bremssystem weist dabei zwei Bremskreisläufe auf, welche jeweils separat über ein Bremsventil 1 mit Druck beaufschlagt werden. Dabei wird der Druck zur Beaufschlagung der jeweiligen Bremskreisläufe auch separat über jeweils vorgesehene Hydraulikspeicher 4 zur Verfügung gestellt. Diese können jedoch über eine gemeinsame Hydraulikleitung aufgeladen werden, wobei sie jeweils getrennt über Rückschlagventile 8 mit dieser in Verbindung stehen. Der in Figur 1 links gezeigte Bremskreislauf ist dabei für das vordere rechte und das hintere linke Rad zuständig, der rechts gezeigte Kreislauf für das vordere linke und das hintere rechte Rad. Hierdurch ergibt sich eine erhöhte Sicherheit des erfindungsgemäßen Bremssystems.

Die Bremsventile 1 sind dabei jeweils als 3-Wege-Druckminderventile ausgeführt, welche über Hydraulikleitungen 11 mit den Hydraulikspeichern 4 und über die Hydraulikleitung 9 mit dem Rücklauf in Verbindung stehen. Durch die Verbindung von Druckminderventilen können die beiden Bremskreise proportional mit Bremsdruck beaufschlagt werden, so dass gefühlvoll gebremst werden kann.

Weiterhin sind jeweils Notventile 2 vorgesehen, mit welchen die Bremskreise jeweils in einem Notfall oder bei einem Kabelbruch mit vollem Bremsdruck beaufschlagt werden können. Hierfür stehen die Notventile ebenfalls über Hydraulikleitungen 11 mit den Hydraulikspeichern 4 in Verbindung. Die Notventile werden dabei ebenfalls elektrisch angesteuert und beaufschlagen insbesondere bei einem Bruch der elektrischen Steuerleitung zur Ansteuerung der Bremsventile 1 die Bremskreisläufe jeweils automatisch mit dem vollen Bremsdruck.

Weiterhin sind Wechselventile 3 vorgesehen, welche garantieren, dass im Notfall kein Druckabfall z. B. über ein nicht ganz geschlossenes Druckminderventil 1 auftritt. Die Wechselventile sind dabei zwischen den Ausgängen der Notventile 2 und der Bremsventile 1 angeordnet und stehen mit den jeweiligen Bremskreisläufen in Verbindung, so dass im Normalbetrieb, wenn am Ausgang des Notventils kein Bremsdruck anliegt, der Ausgang des Bremsventils mit dem Bremskreislauf in Verbindung steht. Liegt dagegen am Ausgang eines Notventils 2 Bremsdruck an, verbinden die Wechselventile diesen automatisch mit dem Bremskreislauf und trennen den Ausgang des Bremsventils automatisch vom Bremskreislauf.

Erfindungsgemäß ergibt sich so ein äußerst sicheres Bremssystem, bei welchem auf eine aufwendige Verschlauchung in die Fahrerkabine und die damit verbundenen Nachteile verzichtet werden kann. Zudem ergibt sich durch die elektronische Ansteuerung ein einstellbares Ansprechverhalten der Betriebsbremsanlage. Weiterhin wird auch die Komplexität der Drehdurchführung verringert, da weniger Drehdurchführungskanäle benötigt werden.

## Patentansprüche

1. Verfahrbares Arbeitsgerät, insbesondere Hydraulikbagger, mit einem Fahrwerk und mit einer hydraulischen Betriebsbremsanlage für das Fahrwerk, welche über mindestens ein Bremsventil mit Bremsdruck beaufschlagt wird, wobei
das Bremsventil elektrisch ansteuerbar ist, wobei es über eine elektrische Steuerleitung mit einem Bedienelement verbunden ist, über welches eine Bedienperson das verfahrbare Arbeitsgerät abbremsen kann,
mit einem Unterwagen, an welchem das Fahrwerk, die Betriebsbremsanlage und das Bremsventil angeordnet sind, und einem auf dem Unterwagen drehbar angeordneten Oberwagen, an welchem das Bedienelement angeordnet ist.
wobei mindestens ein Hydraulikspeicher vorgesehen ist, welcher die hydraulische Betriebsbremsanlage mit Druck versorgt, wobei der Speicher im Unterwagen angeordnet ist,
wobei der Hydraulikspeicher über eine im Oberwagen angeordnete Hydraulikpumpe geladen wird, wobei ein im Oberwagen angeordnetes Speicherladeventil vorgesehen ist.

2. Verfahrbares Arbeitsgerät, insbesondere Hydraulikbagger, mit einem Fahrwerk und mit einer hydraulischen Betriebsbremsanlage für das Fahrwerk, welche über mindestens ein Bremsventil mit Bremsdruck beaufschlagt wird,
wobei
das Bremsventil elektrisch ansteuerbar ist, wobei es über eine elektrische Steuerleitung mit einem Bedienelement verbunden ist, über welches eine Bedienperson das verfahrbare Arbeitsgerät abbremsen kann,
mit einem Unterwagen, an welchem das Fahrwerk, die Betriebsbremsanlage und das Bremsventil angeordnet sind, und einem auf dem Unterwagen drehbar angeordneten Obenwagen, an welchem das Bedienelement angeordnet ist.
wobei mindestens ein Hydraulikspeicher vorgesehen ist, welcher die hydraulische Betriebsbremsanlage mit Druck versorgt, wobei der Speicher im Unterwagen angeordnet ist,
wobei der Hydraulikspeicher über eine im Oberwagen angeordnete Hydraulikpumpe geladen wird, wobei der Hydraulikspeicher über Rückschlagventile mit einen durch die Drehdurchführung zwischen Oberwagen und Unterwagen geführten Ladeleitung in Verbindung steht.

3. Verfahrbares Arbeitsgerät nach einem der vorangegangenen Ansprüche, wobei mindestens ein Notventil vorgesehen ist, welches im Notfall, insbesondere bei einem Bruch der elektrischen Steuerleitung zur Ansteuerung des Bremsventils, die hydraulische Betriebsbremsanlage mit dem vollen Bremsdruck beaufschlagt.

4. Verfahrbares Arbeitsgerät nach Anspruch 3, mit mindestens einem Wechselventil, welches im Notfall das Bremsventil von der Betriebsbremsanlage trennt und das Notventil mit der Betriebsbremsanlage verbindet.

5. Verfahrbares Arbeitsgerät nach einem der vorangegangenen Ansprüche, wobei das Bremsventil als Druckminderventil ausgeführt ist.

6. Verfahrbares Arbeitsgerät nach einem der vorangegangenen Ansprüche, mit einer elektronischen Steuerung, über welche das Ansprechverhalten des Bremsventils bei Betätigung des Bedienelements einstellbar ist.

7. Verfahrbares Arbeitsgerät nach einem der vorangegangenen Ansprüche, mit mindestens zwei Bremskreisen, welche getrennt voneinander jeweils über mindestens ein Bremsventil mit Druck beaufschlagt werden.

8. Verfahrbares Arbeitsgerät nach Anspruch 7, wobei die beiden Bremskreise über Hydraulikspeicher mit Druck versorgt werden, welche im Unterwagen angeordnet sind und über eine gemeinsame Hydraulikleitung geladen werden.

## Claims

1. A traveling working machine, in particular a hydraulic excavator, with a traveling gear and with a hydraulic service brake system for the traveling gear, which is supplied with brake pressure via at least one brake valve,
wherein
the brake valve can be actuated electrically, wherein it is connected with a control element via an electric control line, by means of which an operator can brake the traveling working machine,
with an undercarriage on which the traveling gear, the service brake system and the brake valve are arranged, and with an uppercarriage rotatably arranged on the undercarriage, on which the control element is arranged,
wherein at least one hydraulic accumulator is provided, which supplies the hydraulic service brake system with pressure, wherein the accumulator is arranged in the undercarriage,
wherein the hydraulic accumulator is charged via a hydraulic pump arranged in the uppercarriage, wherein an accumulator charging valve is provided, which is arranged in the uppercarriage.

2. A traveling working machine, in particular a hydraulic excavator, with a traveling gear and with a hydraulic service brake system for the traveling gear, which is supplied with brake pressure via at least one brake valve,
wherein
the brake valve can be actuated electrically, wherein it is connected with a control element via an electric control line, by means of which an operator can brake the traveling working machine,
with an undercarriage on which the traveling gear, the service brake system and the brake valve are arranged, and with an uppercarriage rotatably arranged on the undercarriage, on which the control element is arranged,
wherein at least one hydraulic accumulator is provided, which supplies the hydraulic service brake system with pressure, wherein the accumulator is arranged in the undercarriage,
wherein the hydraulic accumulator is charged via a hydraulic pump arranged in the uppercarriage, wherein via check valves the hydraulic accumulator is connected with a charging line guided through the rotary lead-through between uppercarriage and undercarriage.

3. The traveling working machine according to any of the preceding claims, wherein at least one emergency valve is provided, which in a case of emergency, in particular in the case of a rupture of the electric control line for actuating the brake valve, supplies the hydraulic service brake system with the full brake pressure.

4. The traveling working machine according to claim 3, with at least one reversing valve, which in a case of emergency separates the brake valve from the service brake system and connects the emergency valve with the service brake system.

5. The traveling working machine according to any of the preceding claims, wherein the brake valve is configured as pressure-reducing valve.

6. The traveling working machine according to any of the preceding claims, with an electronic control by means of which the response behavior of the brake valve can be adjusted upon actuation of the control element.

7. The traveling working machine according to any of the preceding claims, with at least two brake circuits, which each can separately be supplied with pressure via at least one brake valve.

8. The traveling working machine according to claim 7, wherein the two brake circuits are supplied with pressure via hydraulic accumulators which are arranged in the undercarriage and are charged via a common hydraulic line.

## Revendications

1. Appareil de travail mobile, notamment pelle excavatrice hydraulique, avec un mécanisme de roulement et un système de freinage de service hydraulique pour le mécanisme de roulement, qui est alimenté en pression de freinage par l'intermédiaire d'au moins un clapet de freinage, le clapet de freinage étant actionnable électriquement,
l'appareil de travail mobile étant relié par l'intermédiaire d'une ligne pilote électrique à un élément de commande, par l'intermédiaire duquel un opérateur peut le freiner, avec un châssis inférieur sur lequel le mécanisme de roulement, le système de freinage de service hydraulique et le clapet de freinage sont disposés, et un châssis tournant disposé de manière rotative sur le châssis inférieur, sur lequel l'élément de commande est disposé,
au moins un accumulateur de pression étant prévu, qui approvisionne le système de freinage de service hydraulique en pression, l'accumulateur étant disposé dans le châssis inférieur,
l'accumulateur de pression étant chargé par l'intermédiaire d'une pompe hydraulique disposée dans le châssis tournant, une vanne de chargement d'accumulateur disposée dans le châssis tournant étant prévue.

2. Appareil de travail mobile, notamment pelle excavatrice hydraulique, avec un mécanisme de roulement et un système de freinage de service hydraulique pour le mécanisme de roulement, qui est alimenté en pression de freinage par l'intermédiaire d'au moins un clapet de freinage, le clapet de freinage étant actionnable électriquement, l'appareil de travail mobile étant relié par l'intermédiaire d'une ligne pilote électrique à un élément de commande, par l'intermédiaire duquel un opérateur peut le freiner, avec un châssis inférieur sur lequel le mécanisme de roulement, le système de freinage de service hydraulique et le clapet de freinage sont disposés, et un châssis tournant disposé de manière rotative sur le châssis inférieur, sur lequel l'élément de commande est disposé,
au moins un accumulateur de pression étant prévu, qui approvisionne le système de freinage de service hydraulique en pression, l'accumulateur étant disposé dans le châssis inférieur,
l'accumulateur de pression étant chargé par l'intermédiaire d'une pompe hydraulique disposée dans le châssis tournant,
l'accumulateur de pression se trouvant en relation par l'intermédiaire de clapets antiretour avec une ligne de chargement guidée par le passage tournant entre le châssis tournant et le châssis inférieur.

3. Appareil de travail mobile selon une quelconque des revendications précédentes, au moins une vanne d'urgence étant prévue, qui, en cas d'urgence, notamment en cas de rupture de la ligne pilote électrique destinée à amorcer le clapet de freinage, le système de freinage de service hydraulique alimentant avec la pression de freinage pleine.

4. Appareil de travail mobile selon la revendication 3, avec au moins une soupape à deux voies, qui, en cas d'urgence, déconnecte le clapet de freinage du système de freinage de service et relie la vanne d'urgence au système de freinage de service.

5. Appareil de travail mobile selon une quelconque des revendications précédentes, le clapet de freinage étant réalisé comme soupape réductrice.

6. Appareil de travail mobile selon une quelconque des revendications précédentes, avec une commande électronique, par l'intermédiaire de laquelle le comportement de réaction du clapet de freinage est réglable à l'actionnement de l'élément de commande.

7. Appareil de travail mobile selon une quelconque des revendications précédentes, avec au moins deux circuits de freinage, qui sont alimentés en pression séparément l'un de l'autre et respectivement par au moins un clapet de freinage.

8. Appareil de travail mobile selon la revendication 7, les deux circuits de freinage étant alimentés en pression par l'intermédiaire d'accumulateurs de pression qui sont disposés dans le chariot inférieur et chargés par l'intermédiaire d'une conduite hydraulique commune.
